# EUROPEAN PATENT APPLICATION

(11) **EP 2 399 876 A2**
(43) Date of publication of application: **28.12.2011**
(21) Application number: 10743935.8
(22) Date of filing: 17.02.2010
(51) Int. Cl.: C04B 35/28, C04B 35/462, C04B 35/45, C04B 35/18

(54) **SINTERING PRECURSOR POWDERS FOR MANUFACTURING DIELECTRIC SUBSTANCE AND METHOD FOR MANUFACTURING THE SAME**

(30) Priority: 18.02.2009 KR 20090013346; 16.02.2010 KR 20100013787
(71) Applicant: SNU R&DB Foundation, Seoul 151-742 (KR)
(72) Inventor: YOO, Sang-Im, Seoul 138-813 (KR); KIM, Young-Mi, Masan-si Gyeongsangnam-do 631-260 (KR); SHIN, Goe-Myung, Seoul 156-031 (KR); LEE, Sung-Yun, Seoul 156-827 (KR)
(74) Representative: Bassil, Nicholas Charles
(86) International application number: PCT/KR2010/000994
(87) International publication number: WO 2010/095860

(57) **Abstract**

The present invention relates to precursor powder for sintering used for preparing a dielectric material. Particularly, the present invention is directed to a precursor powder for sintering used for preparing a dielectric material, comprising a first material powder and a second material powder, a core-shell structured precursor powder for sintering used for a dielectric material, wherein said core is composed of a first material and said shell is composed of a second material, and process for preparing thereof. According to the present invention, a relative dielectric constant of said first material is larger than that of said second material.

## Description

### Field of the Invention

The present invention relates to precursor powder for sintering used for preparing a dielectric material. Particularly, the present invention is directed to a precursor powder for sintering used for preparing a dielectric material, comprising a first material powder and a second material powder, a core-shell structured precursor powder for sintering used for a dielectric material, wherein said core is composed of a first material and said shell is composed of a second material, and process for preparing thereof. According to the present invention, a relative dielectric constant of said first material is larger than that of said second material.

### Backgroud of the Invention

Recently, several studies for making a high capacitance and thinning of multi-layer ceramic capacitors are rapidly in progress in accordance with the trends of miniaturization and high performance of electronic apparatuses. Consequently, reliability of physical properties of dielectric substances used for such electronic devices, such as DC-bias under a high electric field, capacitance variation with temperature change, and etc., has been watched with keen interest.

Presently, BaTiO₃ (hereinafter, also referred to as "BTO") with Perovskite structure is widely used as a dielectric substance with a high dielectiricity. However, the relative dielectric constant of BTO considerably decreases when DC-bias is supplied for BTO. Various technologies for reducing the size of BTO crystalline particles have been studied and developed in order to solve such decrease in the relative dielectric constant of BTO. In spite of the above endeavors, such trials for reducing the size of BTO crystalline particles have rather resulted in reducing the dielectric constant of BTO and affecting adversely the capacitance variation characteristic of BTO with temperature. Meanwhile, a dielectric substance of BTO produced by the conventional technologies has a large dielectric constant of more than 4,000, due to the atomic fluctuation of BTO which results from phase transitions of the atoms with temperature. However, the conventional BTO dielectric material has a characteristic in that its relative dielectric constant considerably changes due to such atomic fluctuation.

Recently, (Ba₁₋ₓCaₓ)TiO₃ (hereinafter, also referred to as " BCT" ) dielectric materials which result from the solid-solution of Ca into part of 'A' sites of BaTiO₃ have developed (JP patent application publication Nos. 2003-277136 and 2004-079686).

However, those prior arts have a disadvantage that total volume of BCT decreases with decrease of atomic fluctuations of BTC due to increase in the amount of Ca substitution for the Ba site and, therefore, the relative dielectric constant of BTC decreases. Moreover, deterioration of the electrical property of BCT is caused by abnormal grain growth due to migration of Ca during a chip firing process since Ca substitutes the Ba site of BaTiO₃. Therefore, it is necessary to use a firing profile and atmosphere to overcome these problems and, for this, large amount of facility investment is to be required.

As such, although BTO has a high dielectric constant, it has a disadvantage in that the change in DC-bias characteristic of BTC is considerable. In addition, although the DC-bias characteristic of BTC improves, the relative dielectric constant of BTO significantly decreases.

Korean patent application No. 10-2005-0033009 discloses a dielectric ceramic composition comprising BaTiO₃ and (Ba₁₋ₓCaₓ)TiO₃ as main components and a multi-layer ceramic capacitor using the dielectric ceramic composition.

However, since BaTiO₃ undergoes a phase transition at about 120°C, BaTiO₃ depends greatly on temperature. Further, since the tetragonality (c/a), the ratio of c axis to a axis in a crystal lattice, of BaTiO₃ should be kept large, various compounds such as magnesium compounds or chromium compounds, yttrium compounds or RE compounds (RE: a rare earth element), manganese compounds or chromium compounds or vanadium compounds, silicon compounds, etc. should be incorporated into BaTiO₃. Therefore, the process for producing the capacitor according to the Korean patent application No. 10-2005-0033009 is very complicated and it is strongly required to develop a process for preparing a dielectric substance with better properties than this capacitor.

As such researches, Deschanvres et al., Bull. Soc. Chim. Fr. 4077 (1967) report the preparation of CaCu₃Ti₄O₁₂ with the perovskite structure and a lattice constant of 0.7393 nm.

In addition, Boche et al., J. Solid State Chem. 29, 291 (1979) report the synthesis and structure of CaCu₃Ti₄O₁₂ and related titanates and report the lattice constant to be 0.7391 nm.

Moreover, Yandrofski et al., U.S. Patent No. 5,472,935, disclose tuneable microwave and millimeter wave devices incorporating tuneable ferroelectrics.

Furthermore, PCT/US2001/014297 discloses a tuneable devices incorporating CaCu₃Ti₄O₁₂ (CCTO). PCT/US2001/014297 describes that CaCu₃Ti₄O₁₂ is useful in tuneable devices which exhibits minimal frequency dependence.

However, CaCu₃Ti₄O₁₂ which has a dielectric constant above 9,000 over a frequency range of 1 kHz to 1 MHz is disadvantageous in that it has a large dielectric loss over a frequency range of more than 100 kHz and, also, its dielectric properties fall down under direct and alternative voltages. Therefore, the tuneable devices of PCT/US2001/014297 have not yet been commercialized.

In order to overcome the disadvantages of the prior arts, CaCu₃Ti₄O₁₂ which is a high dielectric material with a relative dielectric constant of more than 10⁵ (εᵣ > 10⁵) at room temperature and 100 Hz is being actively researched. The relative dielectric constant of CaCu₃Ti₄O₁₂ is much higher than those of other dielectric materials. CaCu₃Ti₄O₁₂ can be used for MLCC (multi-layer ceramic capacitor) and others which require a high dielectric material.

However, CaCu₃Ti₄O₁₂ has not yet been commercialized as a dielectric substance over a certain frequency band since the dielectric loss of conventional CaCu₃Ti₄O₁₂ dielectric substances significantly increases over a frequency range of more than 100 kHz. It is also a disadvantage that the relative dielectric constant of CaCu₃Ti₄O₁₂ (DC-bias) considerably decreases by supplying a DC field and an AC field.

In order to solve such disadvantages, a variety of efforts, such as the addition of MnO₂, ZrO₂, SiO₂ and the like to CaCu₃Ti₄O₁₂, the adjustment of Cu contents in CaCu₃Ti₄O₁₂, etc., has been attempted. Also, different methods for preparing CaCu₃Ti₄O₁₂ dielectric material, such as a solid-state sintering process, a microwave synthesis, a sol-gel synthesis, etc., have recently been tried in order to improve the dielectric properties of CaCu3Ti₄O₁₂.

However, a dielectric material that reduces the dielectric loss of CaCu₃Ti₄O₁₂, the high dielectric material, over a braod frequency range with maintaining the high dielectric constant of CaCu₃Ti₄O₁₂, has not yet been achieved.

The present inventors, in order to overcome the disadvantages of the prior arts, have invented a precursor powder for sintering used for a dielectric substance comprising a mixture of a powder such as CaCu₃Ti₄O₁₂, SrCu₃Ti₄O₁₂, BaCu₃Ti₄O₁₂, NiO doped with Li and Ti, NiO doped with Li and Al, CuO, etc.; and Perovskite-type materials such as CaTiO₃, SrTiO₃, BaTiO₃, MgTiO₃, etc., or single metal oxides such as Al₂O₃, TiO₂, MgO, CaO, SrO, BaO, HfO₂, etc., which have the lower dielectric constant and dielectric loss in the high frequency range than the above-mentioned powders, and a process for preparing the same.

In addition, the present inventors, in order to overcome the disadvantages of the prior arts, have invented a core-shell structured precursor powder for sintering used for a dielectric material comprising a mixture of a powder such as CaCu₃Ti₄O₁₂, SrCu₃Ti₄O₁₂, BaCu₃Ti₄O₁₂, NiO doped with Li and Ti, NiO doped with Li and Al, CuO, etc.; and Perovskite-type materials such as CaTiO₃, SrTiO₃, BaTiO₃, MgTiO₃, etc., or single metal oxides such as Al₂O₃, TiO₂, MgO, CaO, SrO, BaO, HfO₂, etc., which have the lower dielectric constant and dielectric loss in the high frequency range than the above-mentioned powders, and a process for preparing the same.

### Detailed Description of the Invention

### Technical Problem

The primary object of the present invention is to provide a precursor powder for sintering used for preparing a dielectric material, comprising a first material powder and a second material powder, wherein a relative dielectric constant of said first material is larger than that of said second material.

Another object of the present invention is to provide a process for preparing a precursor powder for sintering used for preparing a dielectric material, comprising mixing a first material powder and a second material powder, wherein a relative dielectric constant of said first material is larger than that of said second material.

Further object of the present invention is to provide a core-shell structured precursor powder for sintering used for a dielectric material, wherein said core is composed of a first material and said shell is composed of a second material, and wherein a relative dielectric constant of said first material is larger than that of said second material.

Yet another object of the present invention is to provide a process for preparing a core-shell structured precursor powder for sintering used for a dielectric material, comprising: i) mixing a first material powder with a coating composition to coat said first material powder; ii) drying the mixture obtained from the step i); and iii) calcinating the dried mixture of the step ii) to form a core of said first material and a shell of a second material which covers said core.

### Technical Solution

The above-mentioned primary object of the present invention may be achieved by providing a precursor powder for sintering used for preparing a dielectric material, comprising a first material powder and a second material powder, wherein a relative dielectric constant of said first material is larger than that of said second material.

The difference between the relative dielectric constant of the first material, which is included into the the precursor powder of the present invention, and the relative dielectric constant of the second material is, preferably equal to or more than 1,000, more preferably equal to or more than 3,000 and most preferably equal to or more than 5,000 at 25°C.

The first material may be selected from NiO doped with Li and Ti, NiO doped with Li and Al, CuO, or ACu₃Ti₄O₁₂ with Perovskite structure, and A may be Ca, Sr, Ca₁₋ₓSrₓ, Sr₁₋ₓBaₓ, Ca₁₋ₓBaₓ, SC_{2/3}, Y_{2/3}, La_{2/3}, Ce_{2/3}, Pr_{2/3}, Nd_{2/3}, Pm_{2/3}, Sm_{2/3}, EU_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2}, and 0<x<1.

The second material may be selected from A' TiO₃, Al₂O₃, HfO₂, TiO₂, MgO, SiO₂ or LaLuO₃, and A' is Mg, Ca, Sr, Ba, Mg₁₋ₓCaₓ, Mg₁₋ₓSrₓ, Mg₁₋ₓBaₓ, Ca₁₋ₓSrₓ, Sr₁₋ₓBaₓ or Ca₁₋ₓBaₓ, and 0<x<1.

The characteristic of the dielectric loss of a sintered body resulting from sintering a mixture of CCTO and BTO improves, comparing with that of a sintered body resulting from sintering only CCTO powders.

The another object of the present invention can be achieved by providing a process for preparing a precursor powder for sintering used for preparing a dielectric material, comprising mixing a first material powder and a second material powder, wherein a relative dielectric constant of said first material is larger than that of said second material.

The difference between the relative dielectric constant of the first material, which is used for the the process for preparing a precursor powder of the present invention, and the relative dielectric constant of the second material is, preferably equal to or more than 1,000, more preferably equal to or more than 3,000 and most preferably equal to or more than 5,000 at 25°C.

The first material may be selected from NiO doped with Li and Ti, NiO doped with Li and Al, CuO, or ACu₃Ti4O₁₂ with Perovskite structure, and A may be Ca, Sr, Ca₁₋ₓSrₓ, Sr₁₋ₓBaₓ, Ca₁₋ₓBaₓ, SC_{2/3}, Y_{2/3}, La_{2/3}, Ce_{2/3}, Pr_{2/3}, Nd_{2/3}, Pm_{2/3}, Sm_{2/3}, EU_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2}, and 0<x<1.

The second material may be selected from A' TiO₃, Al₂O₃, HfO₂, TiO₂, MgO, SiO₂ or LaLuO₃, and A' is Mg, Ca, Sr, Ba, Mg₁₋ₓCaₓ, Mg₁₋ₓSrₓ, Mg₁₋ₓBaₓ, Ca₁₋ₓSrₓ, Sr₁₋ₓBaₓ or Ca₁₋ₓBaₓ, and 0<x<1.

The further object of the present invention can be achieved by providing a core-shell structured precursor powder for sintering used for a dielectric material, wherein said core is composed of a first material and said shell is composed of a second material, and wherein a relative dielectric constant of said first material is larger than that of said second material.

The difference between the relative dielectric constant of the first material, which is included into the the core-shell structured precursor powder of the present invention, and the relative dielectric constant of the second material is, preferably equal to or more than 1,000, more preferably equal to or more than 3,000 and most preferably equal to or more than 5,000 at 25°C.

The first material may be selected from NiO doped with Li and Ti, NiO doped with Li and Al, CuO, or ACu₃Ti₄O₁₂ with Perovskite structure, and A may be Ca, Sr, Ca₁₋ₓSrₓ, Sr₁₋ₓBaₓ, Ca₁₋ₓBaₓ, SC_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2}, and 0<x<1.

The second material may be selected from A' TiO₃, Al₂O₃, Hf₂, TiO₂, MgO, SiO₂ or LaLuO₃, and A' is Mg, Ca, Sr, Ba, Mg₁₋ₓCaₓ, Mg₁₋ₓSrₓ, Mg₁₋ₓBaₓ, Ca₁₋ₓSrₓ, Sr₁₋ₓBaₓ or Ca₁₋ₓBaₓ, and 0<x<1.

Sintered substances (materials) prepared by the precursor powders of the present invention shows more than three to five times higher dielectric constants than the conventional sintered substances produced from BaTiO₃, and has very low dielectric loss in the high frequency range of more than 10⁵ Hz. That is, the sintered substances (materials) prepared by the precursor powders of the present invention shows significantly enhanced performance as a dielectric material, comparing with BaTiO₃ powders according the conventional art.

The core-shell structured precursor powder of the present invention, may further comprises a shell of a third material which covers said shell of the second material, wherein a relative dielectric constant of the first material is larger than that of the third material. That is, The core-shell structured precursor powder of the present invention, may comprise two or more shell layers.

The yet another object of the present invention can be achieved by providing a process for preparing a core-shell structured precursor powder for sintering used for a dielectric material, comprising: i) mixing a first material powder with a coating composition to coat said first material powder; ii) drying the mixture obtained from the step i); and iii) calcinating the dried mixture of the step ii) to form a core of said first material and a shell of a second material which covers said core.

The first material which is used for the process for preparing a core-shell structured precursor powder of the present invention, may be selected from NiO doped with Li and Ti, NiO doped with Li and Al, CuO, or ACu₃Ti₄O₁₂ with Perovskite structure, and A may be Ca, Sr, Ca₁₋ₓSrₓ, Sr₁₋ₓBaₓ, Ca₁₋ₓBaₓ, SC_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2}, and 0<x<1.

According to the process for preparing a core-shell structured precursor powder of the present invention, the coating composition may be a mixture of titanium isopropoxide and one or two selected from acetates such as Mg(CH₃COO)₂, Ca(CH₃COO)₂, Sr(CH₃COO)₂ and Ba(CH₃COO)₂, and acetylacetonates such as Mg(C₂H₇O₂)₂, Ca(C₂H₇O₂)₂, Sr(C₂H₇O₂)₂ and Ba(C₂H₇O₂)₂, when the shell is A' TiO₃, wherein A' is Mg, Ca, Sr, Ba, Mg₁₋ₓCaₓ, Mg₁₋ₓSrₓ, Mg₁₋ₓBaₓ, Ca₁₋ₓSrₓ, Sr₁₋ₓBaₓ or Ca₁₋ₓBaₓ, and 0<x<1.

In detail, metal halides, metal nitride, metal hydroxide, metal halocarboxylate, etc. may be used as precursors of A' and metal halide, metal carboxylate, metal halocarboxylate, etc. may be used as precursors of Ti.

According to the process for preparing a core-shell structured precursor powder of the present invention, the coating composition may be a mixture of titanium isopropoxide, acetylacetone, acetic acid and one or two selected from Mg(C₂H₃O₂)₂, Ca(CH₃COO)₂, Sr(CH₃COO)₂ or Ba(CH₃COO)₂. In this case, the shell is A' TiO₃ and A' is Mg, Ca, Sr, Ba, Mg₁₋ₓCaₓ, Mg₁₋ₓSrₓ, Mg₁₋ₓBaₓ, Ca₁-ₓSrₓ, Sr₁₋ₓBaₓ or Ca₁₋ₓBaₓ, and 0<x<1.

In addition, when the shell is a single metal oxide, the precursors used for the coating composition may be a mixture of water or an organic solvent such as ethanol, and one selected from Mg(C₂H₃O₂)₂, HfCl₄, Al(CH₃COO)₂, or Si(CH₃COO)₂. In this case, the materials composing of the shell are MgO, HfO₂, Al₂O₃ or SiO₂. Even in this case, metal halides, metal nitrides, metal hydroxides, metal halocarboxylates or metal carboxylates, etc. may be used as precursors, as in the case of A' TiO₃ coating.

Further, the coating composition may be a mixture of titanium isopropoxide or titanium carboxylate, and an organic solvent such as ethanol and, in this case, the shell is TiO₂.

According to the process for preparing a core-shell structured precursor powder of the present invention, the drying of the step ii) may be carried out by heating the mixture obtained from the step i) at 80°C to 100°C, or by a spray drying.

In order to prepare a core-shell structured precursor powder according the the present invention, the temperature of calcinating of said step iii) is preferably between 1,000°C to 1,150°C.

### Advantageous Effects

As described above, the electrical properties with frequency and the electrical properties under a DC or AC supply, of the core-shell structured precursor powder for sintering used for dielectric material, according to the present invention, are better than those of the conventional sintered materials.

For example, the dielectric loss of the core-shell structured sintered material of CaCu₃Ti₄O₁₂-BaTiO₃ is below 0.25 at 1 MHz, whereas that of the conventional CaCu₃Ti₄O₁₂ is above 1.0 at 1 MHz. Under a DC electric field, the dielectric breakdown of the conventional CaCu₃Ti₄O₁₂ occurs about 1 V. However, in the case of the core-shell structure according to the present invention, the dielectric breakdown does not occur up to 100 V or more and the resistivity are constant. In addition, under an AC electric field, the dielectric breakdown of the conventional CaCu₃Ti₄O₁₂ occurs about 1 V, whereas, in the case of the core-shell structure according to the present invention, the dielectric breakdown does not occur up to 100 V or more.

In addition, ceramic powders for a dielectric substance, which have a better dielectric constant than BaTiO₃ of which dielectric constant is higher than that of any other conventional dielectric substances that have been used up to now, can be prepared by using the core-shell structured precursor powder for sintering, of the present invention.

For example, the dielectric constant of the conventional pure BaTiO₃ is about 2,000 at 1 kHz, whereas, in the case of the core-shell structure of CaCu₃Ti₄O₁₂-BaTiO₃, the dielectric constant is about 10,000.

### Brief Description of the Drawings

Fig. 1 shows the dielectric characteristics of the sintered materials of the mixture of CaCu₃Ti₄O₁₂ powders and BaTiO₃ powders with various mixing ratio, and CaCu₃Ti₄O₁₂ powders.
Fig. 2 shows the microstructures of the mixture powders and CaCu₃Ti₄O₁₂ powders of Fig. 1.

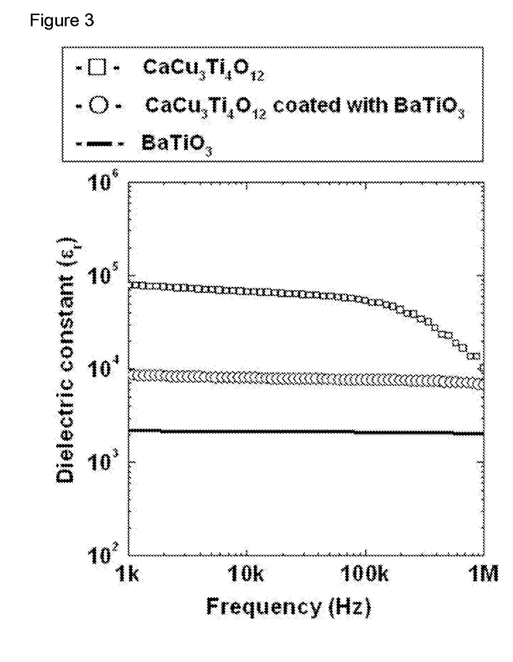

Fig. 3 is a graph that shows the relative dielectric constants with frequency, of the sintered materials of CaCu₃Ti₄O₁₂ powders, BaTiO₃ powders, and CaCu₃Ti₄O₁₂-BaTiO₃ core-shell powders of the present invention.
Fig. 4 is a graph that shows the dielectric losses with frequency, of the sintered materials of CaCu₃Ti₄O₁₂ powders, BaTiO₃ powders, and CaCu₃Ti₄O₁₂-BaTiO₃ core-shell powders of the present invention.
Fig. 5 is a graph that shows the leakage currents with DC voltage, of the sintered materials of CaCu₃Ti₄O₁₂ powders, and CaCu₃Ti₄O₁₂-BaTiO₃ core-shell powders of the present invention.
Fig. 6 is a graph that shows the resistivities with DC voltage, of the sintered materials of CaCu₃Ti₄O₁₂ powders, and CaCu₃Ti₄O₁₂-BaTiO₃ core-shell powders of the present invention.
Fig. 7 is a graph that shows the relative dielectric constants with AC voltage, of the sintered materials of CaCu₃Ti₄O₁₂ powders, and CaCu₃Ti₄O₁₂-BaTiO₃ core-shell powders of the present invention.
Fig. 8 is a graph that shows the dielectric losses with AC voltage, of the sintered materials of CaCu₃Ti₄O₁₂ powders, and CaCu₃Ti₄O₁₂-BaTiO₃ core-shell powders of the present invention.
Fig. 9 is a graph that shows the relative dielectric constants with DC voltage, of the sintered materials of CaCu₃Ti₄O₁₂ powders; and CaCu₃Ti₄O₁₂-MgTiO₃ core-shell powders, CaCu₃Ti₄O₁₂-CaTiO₃ core-shell powders, CaCu₃Ti₄O₁₂-SrTiO₃ core-shell powders and CaCu₃Ti₄O₁₂-BaTiO₃ core-shell powders of the present invention.
Fig. 10 is a graph that shows the dielectric losses with DC voltage, of the sintered materials of CaCu₃Ti₄O₁₂ powders; and CaCu₃Ti₄O₁₂₋MgTiO₃ core-shell powders, CaCu₃Ti₄O₁₂-CaTiO₃ core-shell powders, CaCu₃Ti₄O₁₂-SrTiO₃ core-shell powders and CaCu₃Ti₄O₁₂₋BaTiO₃ core-shell powders of the present invention.
Fig. 11 is a graph that shows the relative dielectric constants with DC voltage, of the sintered materials of CaCu₃Ti₄O₁₂ powders; and CaCu₃Ti₄O₁₂-Al₂O₃ core-shell powders, CaCu₃Ti₄O₁₂-TiO₂ core-shell powders and CaCu₃Ti₄O₁₂-MgO core-shell powders of the present invention.
Fig. 12 is a graph that shows the dielectric losses with DC voltage, of the sintered materials of CaCu₃Ti₄O₁₂ powders; and CaCu₃Ti₄O₁₂-Al₂O₃ core-shell powders, CaCu₃Ti₄O₁₂-TiO₂ core-shell powders and CaCu₃Ti₄O₁₂-MgO core-shell powders of the present invention.
Fig. 13 is images obtained after heat treatment of the CaCu₃Ti₄O₁₂-BaTiO₃ core-shell powders of Example 3.
Fig. 14 is images obtained after heat treatment of the CaCu₃Ti₄O₁₂-BaTiO₃ core-shell powders of Example 3.

### Best Mode for Carrying Out the Invention

Hereinafter, the present invention will be described in greater detail with reference to the following examples and drawings. The examples and drawings are given only for illustration of the present invention and not to be limiting the present invention.

### Example 1. Preparation of CaCu₃Ti₄O₁₂ powders and a sintered material of CaCu₃Ti₄O₁₂

Powders of CaCO₃, CuO and TiO₂ with a mole ratio of 1:3:4 were added into a polyethylene container with zirconia balls therein and mixed with addition of anhydrous ethanol, and then were ball-milled. The solvent was evaporated from the slurry thus obtained. The dried powders were ground and sieved, and then heated up to 950°C at a rate of 5 °C/min under air, followed by calcination at 950°C for 24 hours.

Then, in order to produce ceramics, powders prepared by ball-milling, drying, grinding and sieving as above were formed as a disk-shape through uniaxial pressing, followed by cold isostatic pressing at 150 MPa. The thus prepared samples were introduced into a heat treatment furnace and, after the furnace was heated up to 1,060°C at a rate of 5 °C/min, were sintered at this temperature for 24 hours.

### Example 2. Preparation of a mixture of CaCu₃Ti₄O₁₂ powders and BaTiO₃ powders and a sintered material of the mixture

CaCu₃Ti₄O₁₂ powders were mixed in a ball mill with 5 mol%, 10 mol%, 15 mol% and 20 mol% BaTiO₃, respectively. The mixtures and CaCu₃Ti₄O₁₂ powders were formed as a disk-shape through uniaxial pressing, followed by cold isostatic pressing at 150 MPa. The thus prepared samples were introduced into a heat treatment furnace and, after the furnace was heated up to 1,060°C at a rate of 5 °C/min, were sintered at this temperature for 24 hours.

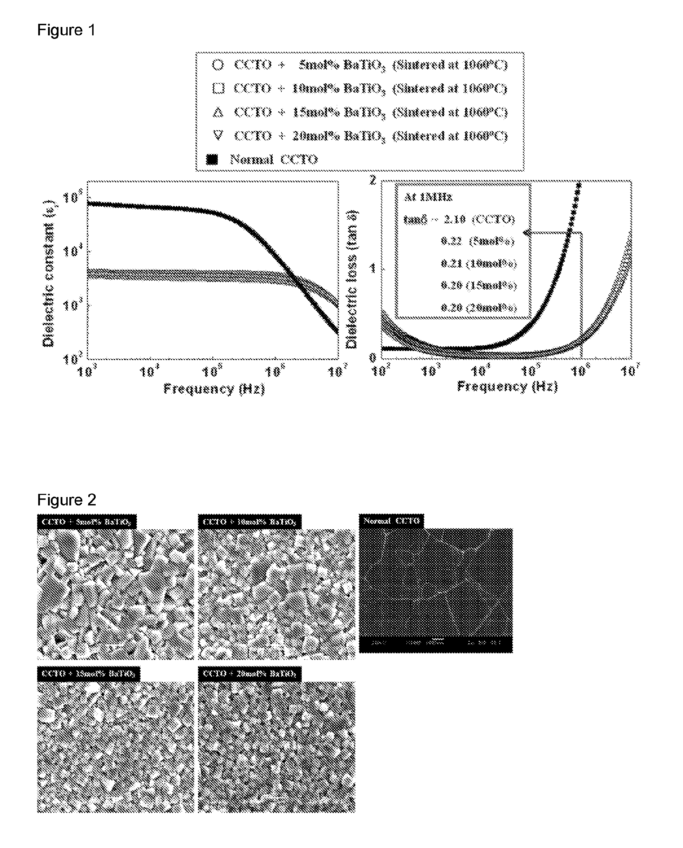

Fig. 1 shows the dielectric characteristics of the thus prepared sintered materials and Fig. 2 shows the microstructures of the mixtures and CaCu₃Ti₄O₁₂ powders.

### Example 3. Preparation of core-shell structured CaCu₃Ti₄O₁₂-BaTiO₃ and a sintered material thereof

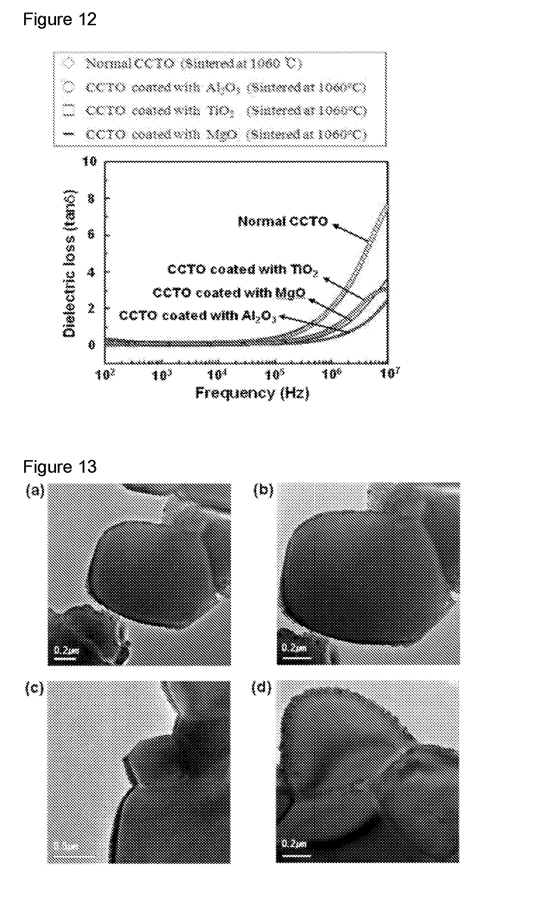

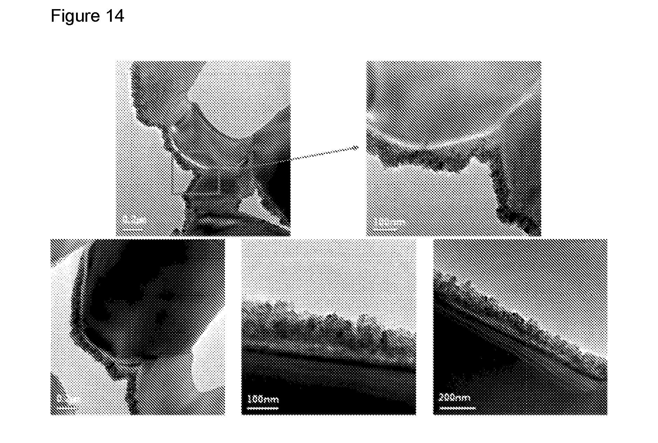

0.205 ml of Ti[OCH(CH₃)₂]₄ and 0.22 ml of acetylacetone (C₅H₈O₂) were added into a beaker. 0.175 g of (C₂H₃O₂)₂Ba solution was added into the beaker and then the mixture was stirred with addition of 100 ml of acetic acid until the (C₂H₃O₂)₂Ba was completely dissolved, followed by stirring with addition of 10 g of CaCu₃Ti₄O₁₂ powder for about 1 hour. Then, the mixture solution was stirred at 80°C and 200 rpm until the acetic acid was completely evaporated. The thus obtained dried powders in alumina crucibles were introduced into an electric furnace and heated up to 1,100°C at a rate of 1.5 °C/min, followed by heat treatment at 1,100°C for 12 hours. The TEM images of the thus obtained heat-treated powders are shown in Fig. 13 and Fig. 14.

The heat-treated powders were ground in a mortar and sieved, and then sintered in order to measure the electrical properties. The sintering procedure was carried out by adding 1.2 g of the powders into a disk-shaped 15Φ (i.e., diameter of 15 mm) mold, and then usniaxially pressing thereof, followed by cold isostatic press at 150 MPa. The thus obtained compacts were heated up to 1,120°C in an electric furnace at a rate of 5 °C/min and, then, were sintered at this temperature. After the sintering, silver paste was applied on the both sides of each sintered material, and the silver pasted sintered materials were heated up to at a rate of 5 °C/min, followed by baking at 600°C.

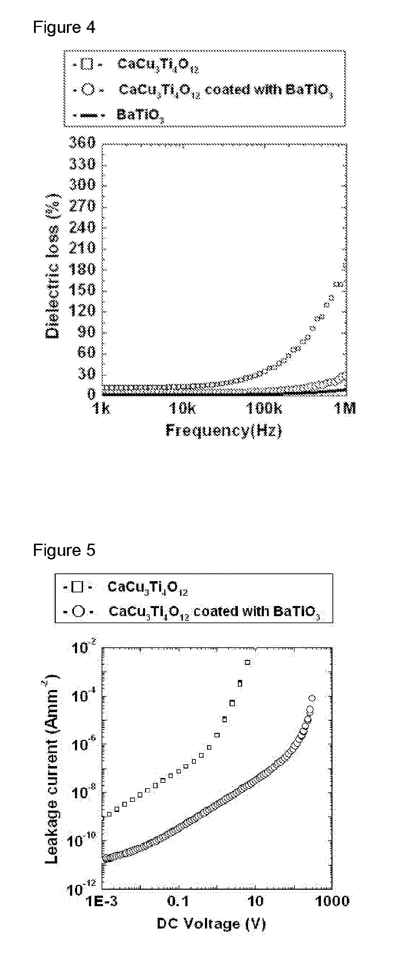

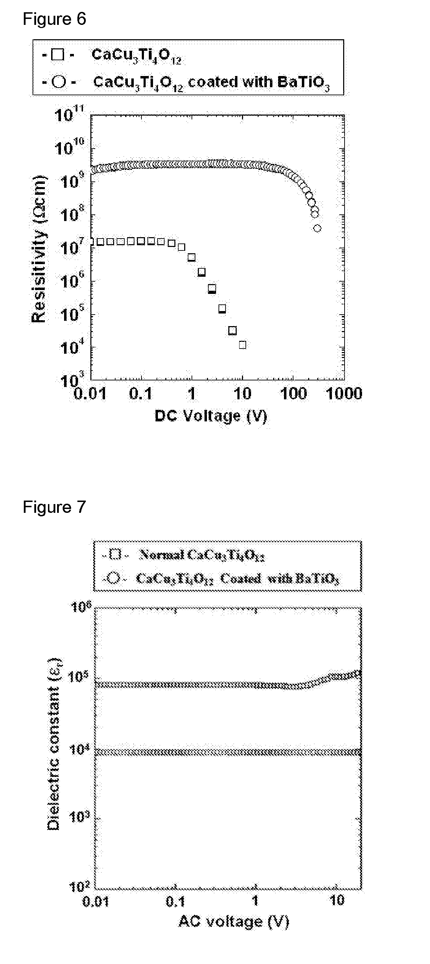

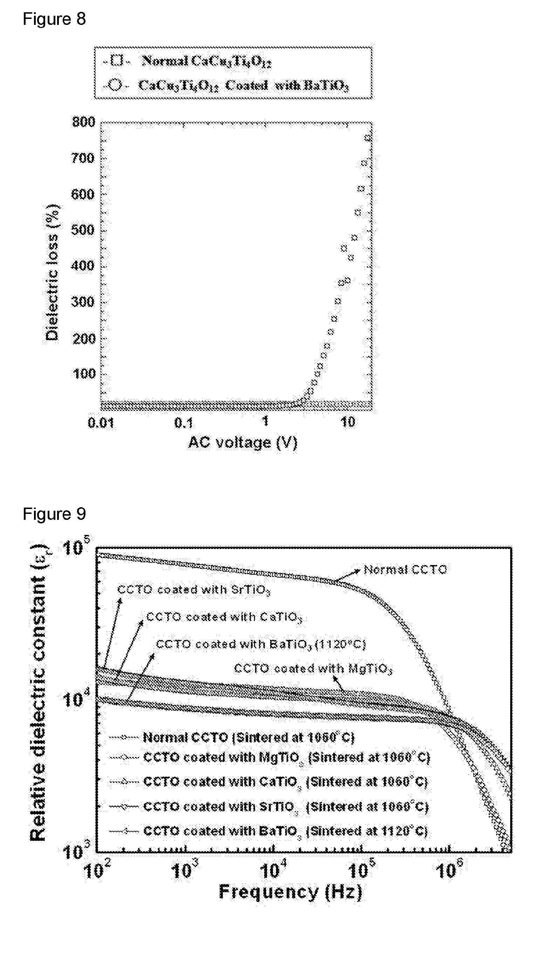

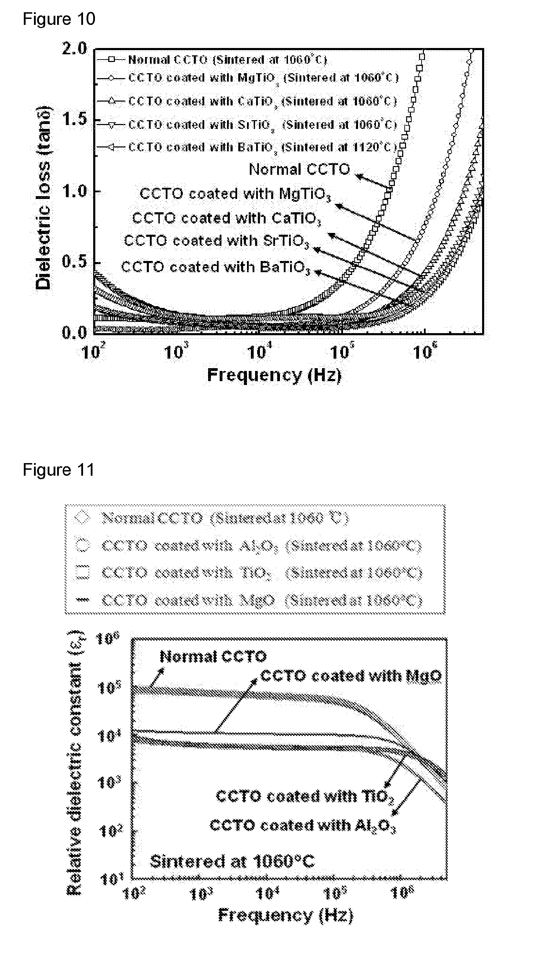

The leakage currents (Fig. 5) and the resistivity (Fig. 6) uder a DC voltage, the relative dielectric constants (Fig. 7) and the dielectric losses (Fig. 8) under an AC voltage, and the relative dielectric constants (Fig. 9) and the dielectric losses (Fig. 10) with frequency, were measured for the sintered material.

### Example 4. Preparation of core-shell structured CaCu₃Ti₄O₁₂-CaTiO₃ and a sintered material thereof

0.205 ml of Ti[OCH(CH₃)₂]₄ and 0.22 ml of acetylacetone (C₅H₈O₂) were added into a beaker. 0.212 g of (C₂H₃O₂)₂Ca solution was added into the beaker and then the mixture was stirred with addition of 100 ml of acetic acid until the (C₂H₃O₂)₂Ca was completely dissolved, followed by stirring with addition of 10 g of CaCu₃Ti₄O₁₂ powder for about 1 hour. Then, the mixture solution was stirred at 80°C and 200 rpm until the acetic acid was completely evaporated. The thus obtained dried powders in alumina crucibles were introduced into an electric furnace and heated up to 1,100°C at a rate of 1.5 °C/min, followed by heat treatment at 1,100°C for 12 hours.

The heat-treated powders were ground in a mortar and sieved, and then sintered in order to measure the electrical properties. The sintering procedure was carried out by adding 1.2 g of the powders into a disk-shaped 15Φ (i.e., diameter of 15 mm) mold, and then usniaxially pressing thereof, followed by cold isostatic press at 150 MPa. The thus obtained compacts were heated up to 1,060°C in an electric furnace at a rate of 5 °C/min and, then, were sintered at this temperature. After the sintering, silver paste was applied on the both sides of each sintered material, and the silver pasted sintered materials were heated up to at a rate of 5 °C/min, followed by baking at 600°C.

The relative dielectric constants (Fig. 9) and the dielectric losses (Fig. 10) with frequency, were measured for the sintered material.

### Example 5. Preparation of core-shell structured CaCu₃Ti₄O₁₂-SrTiO₃ and a sintered material thereof

0.205 ml of Ti[OCH(CH₃)₂]₄ and 0.22 ml of acetylacetone (C₅H₈O₂) were added into a beaker. 0.140 g of (C₂H₃O₂)₂Sr solution was added into the beaker and then the mixture was stirred with addition of 100 ml of acetic acid until the (C₂H₃O₂)₂Sr was completely dissolved, followed by stirring with addition of 10 g of CaCu₃Ti₄O₁₂ powder for about 1 hour. Then, the mixture solution was stirred at 80°C and 200 rpm until the acetic acid was completely evaporated. The thus obtained dried powders in alumina crucibles were introduced into an electric furnace and heated up to 1,100°C at a rate of 1.5 °C/min, followed by heat treatment at 1,100°C for 12 hours.

The heat-treated powders were ground in a mortar and sieved, and then sintered in order to measure the electrical properties. The sintering procedure was carried out by adding 1.2 g of the powders into a disk-shaped 15φ (i.e., diameter of 15 mm) mold, and then usniaxially pressing thereof, followed by cold isostatic press at 150 MPa. The thus obtained compacts were heated up to 1,060°C in an electric furnace at a rate of 5 °C/min and, then, were sintered at this temperature. After the sintering, silver paste was applied on the both sides of each sintered material, and the silver pasted sintered materials were heated up to at a rate of 5 °C/min, followed by baking at 600°C.

The relative dielectric constants (Fig. 9) and the dielectric losses (Fig. 10) with frequency, were measured for the sintered material.

### Example 6. Preparation of core-shell structured CaCu₃Ti₄O₁₂-MgTiO₃ and a sintered material thereof

0.205 ml of Ti[OCH(CH₃)₂]₄ and 0.22 ml of acetylacetone (C₅H₈O₂) were added into a beaker. 0.145 g of (C₂H₃O₂)_{2·}2Mg·4H₂O solution was added into the beaker and then the mixture was stirred with addition of 100 ml of acetic acid until the (C₂HsO₂)_{2·}2Mg·4H₂O was completely dissolved, followed by stirring with addition of 10 g of CaCu₃Ti₄O₁₂ powder for about 1 hour. Then, the mixture solution was stirred at 80°C and 200 rpm until the acetic acid was completely evaporated. The thus obtained dried powders in alumina crucibles were introduced into an electric furnace and heated up to 1,100°C at a rate of 1.5 °C/min, followed by heat treatment at 1,100°C for 12 hours.

The heat-treated powders were ground in a mortar and sieved, and then sintered in order to measure the electrical properties. The sintering procedure was carried out by adding 1.2 g of the powders into a disk-shaped 15Φ (i.e., diameter of 15 mm) mold, and then usniaxially pressing thereof, followed by cold isostatic press at 150 MPa. The thus obtained compacts were heated up to 1,060°C in an electric furnace at a rate of 5 °C/min and, then, were sintered at this temperature. After the sintering, silver paste was applied on the both sides of each sintered material, and the silver pasted sintered materials were heated up to at a rate of 5 °C/min, followed by baking at 600°C.

The relative dielectric constants (Fig. 9) and the dielectric losses (Fig. 10) with frequency, were measured for the sintered material.

### Example 7. Preparation of core-shell structured CaCu₃Ti₄O₁₂-MgO and a sintered material thereof

0.145 g of (C₂H₃O₂)₂Mg was added into a beaker and 100 ml of anhydrous ethanol was added into the beaker and, then, the mixture was stirred until the (C₂H₃O₂)₂Mg was completely dissolved, followed by stirring with addition of 10 g of CaCu₃Ti₄O₁₂ powder for about 1 hour. Then, the mixture solution was stirred at 80°C and 200 rpm until the anhydrous ethanol was completely evaporated. The thus obtained dried powders in alumina crucibles were introduced into an electric furnace and heated up to 1,100°C at a rate of 1.5 °C/min, followed by heat treatment at 1,100°C for 12 hours.

The heat-treated powders were ground in a mortar and sieved, and then sintered in order to measure the electrical properties. The sintering procedure was carried out by adding 1.2 g of the powders into a disk-shaped 15Φ (i.e., diameter of 15 mm) mold, and then usniaxially pressing thereof, followed by cold isostatic press at 150 MPa. The thus obtained compacts were heated up to 1,060°C in an electric furnace at a rate of 5 °C/min and, then, were sintered at this temperature. After the sintering, silver paste was applied on the both sides of each sintered material, and the silver pasted sintered materials were heated up to at a rate of 5 °C/min, followed by baking at 600°C.

The dielectric characteristics (Fig. 11 and Fig. 12) with frequency, were measured for the sintered material.

### Example 8. Preparation of core-shell structured CaCu₃Ti₄O₁₂-Al₂O₃ and a sintered material thereof

0.191 g of (C₂H₃O₂)₂Al was added into a beaker and 100 ml of anhydrous ethanol was added into the beaker and, then, the mixture was stirred until the (C₂H₃O₂)₂Al was completely dissolved, followed by stirring with addition of 10 g of CaCu₃Ti₄O₁₂ powder for about 1 hour. Then, the mixture solution was stirred at 80°C and 200 rpm until the anhydrous ethanol was completely evaporated. The thus obtained dried powders in alumina crucibles were introduced into an electric furnace and heated up to 1,100°C at a rate of 1.5 °C/min, followed by heat treatment at 1,100°C for 12 hours.

The heat-treated powders were ground in a mortar and sieved, and then sintered in order to measure the electrical properties. The sintering procedure was carried out by adding 1.2 g of the powders into a disk-shaped 15Φ (i.e., diameter of 15 mm) mold, and then usniaxially pressing thereof, followed by cold isostatic press at 150 MPa. The thus obtained compacts were heated up to 1,060°C in an electric furnace at a rate of 5 °C/min and, then, were sintered at this temperature. After the sintering, silver paste was applied on the both sides of each sintered material, and the silver pasted sintered materials were heated up to at a rate of 5 °C/min, followed by baking at 600°C.

The relative dielectric constants (Fig. 11) and the dielectric losses (Fig. 12) with frequency, were measured for the sintered material.

### Example 9. Preparation of core-shell structured CaCu₃Ti₄O₁₂-TiO₂ and a sintered material thereof

0.205 ml of Ti[OCH(CH₃)₂]₄ and 0.22 ml of acetylacetone (C₅H₈O₂) were added into a beaker. 100 ml of anhydrous ethanol was added into the beaker and then the mixture was stirred until the Ti[OCH(CH₃)₂]₄ was completely dissolved, followed by stirring with addition of 10 g of CaCu₃Ti₄O₁₂ powder for about 1 hour. Then, the mixture solution was stirred at 80°C and 200 rpm until the anhydrous ethanol was completely evaporated. The thus obtained dried powders in alumina crucibles were introduced into an electric furnace and heated up to 1,100°C at a rate of 1.5 °C/min, followed by heat treatment at 1,100°Cfor 12 hours.

The heat-treated powders were ground in a mortar and sieved, and then sintered in order to measure the electrical properties. The sintering procedure was carried out by adding 1.2 g of the powders into a disk-shaped 15Φ (i.e., diameter of 15 mm) mold, and then usniaxially pressing thereof, followed by cold isostatic press at 150 MPa. The thus obtained compacts were heated up to 1,060°C in an electric furnace at a rate of 5 °C/min and, then, were sintered at this temperature. After the sintering, silver paste was applied on the both sides of each sintered material, and the silver pasted sintered materials were heated up to at a rate of 5 °C/min, followed by baking at 600°C.

The relative dielectric constants (Fig. 11) and the dielectric losses (Fig. 12) with frequency, were measured for the sintered material.

### Example 10. Preparation of core-shell structured CaCu₃Ti₄O₁₂-HfO₂ and a sintered material thereof

0.191 g of HfCl₄ was added into a beaker and 100 ml of anhydrous ethanol was added into the beaker and, then, the mixture was stirred until the HfCl₄ was completely dissolved, followed by stirring with addition of 10 g of CaCu₃Ti₄O₁₂ powder for about 1 hour. Then, the mixture solution was stirred at 80°C and 200 rpm until the anhydrous ethanol was completely evaporated. The thus obtained dried powders in alumina crucibles were introduced into an electric furnace and heated up to 1,100°C at a rate of 1.5 °C/min, followed by heat treatment at 1,100°C for 12 hours.

The heat-treated powders were ground in a mortar and sieved, and then sintered in order to measure the electrical properties. The sintering procedure was carried out by adding 1.2 g of the powders into a disk-shaped 15Φ (i.e., diameter of 15 mm) mold, and then usniaxially pressing thereof, followed by cold isostatic press at 150 MPa. The thus obtained compacts were heated up to 1,060°C in an electric furnace at a rate of 5 °C/min and, then, were sintered at this temperature. After the sintering, silver paste was applied on the both sides of each sintered material, and the silver pasted sintered materials were heated up to at a rate of 5 °C/min, followed by baking at 600°C.

The relative dielectric constants (Fig. 11) and the dielectric losses (Fig. 12) with frequency, were measured for the sintered material.

## Claims

1. A precursor powder for sintering used for preparing a dielectric material, comprising a first material powder and a second material powder, wherein a relative dielectric constant of said first material is larger than that of said second material.

2. The precursor powder of Claim 1, wherein a difference between the relative dielectric constant of said first material and the relative dielectric constant of said second material is equal to or more than 1,000 at 25°C.

3. The precursor powder of Claim 1, wherein a difference between the relative dielectric constant of said first material and the relative dielectric constant of said second material is equal to or more than 3,000 at 25°C.

4. The precursor powder of Claim 1, wherein a difference between the relative dielectric constant of said first material and the relative dielectric constant of said second material is equal to or more than 5,000 at 25°C.

5. The precursor powder of Claim 1, wherein said first material is selected from the group consisting of NiO doped with Li and Ti, NiO doped with Li and Al, CuO, and ACu₃Ti4O₁₂ with Perovskite structure, and wherein A is Ca, Sr, Ca₁₋ₓSrₓ, Sr₁₋ₓBaₓ, Ca₁₋ₓBaₓ, SC_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2}; and 0<x<1.

6. The precursor powder of Claim 1, wherein said second material is selected from the group consisting of A' TiO₃, Al₂O₃, HfO₂, TiO₂, MgO, SiO₂ and LaLuO₃, and wherein A' is Mg, Ca, Sr, Ba, Mg₁₋ₓCaₓ, Mg₁₋ₓSrₓ, Mg₁₋ₓBaₓ, Ca₁₋ₓSrₓ, Sr₁₋ₓBaₓ or Ca₁₋ₓBaₓ; and 0<x<1.

7. A process for preparing a precursor powder for sintering used for preparing a dielectric material, comprising mixing a first material powder and a second material powder, wherein a relative dielectric constant of said first material is larger than that of said second material.

8. The process of Claim 7, wherein a difference between the relative dielectric constant of said first material and the relative dielectric constant of said second material is equal to or more than 1,000 at 25°C.

9. The process of Claim 7, wherein a difference between the relative dielectric constant of said first material and the relative dielectric constant of said second material is equal to or more than 3,000 at 25°C.

10. The process of Claim 7, wherein a difference between the relative dielectric constant of said first material and the relative dielectric constant of said second material is equal to or more than 5,000 at 25°C.

11. The process of Claim 7, wherein said first material is selected from the group consisting of NiO doped with Li and Ti, NiO doped with Li and Al, CuO, and ACu₃Ti₄O₁₂ with Perovskite structure, and wherein A is Ca, Sr, Ca₁₋ₓSrₓ, Sr₁₋ₓBaₓ, Ca₁₋ₓBaₓ, Sc_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2}; and 0<x<1.

12. The process of Claim 7, wherein said second material is selected from the group consisting of A' TiO₃, Al₂O₃, HfO₂, TiO₂, MgO, SiO₂ and LaLuO₃, and wherein A' is Mg, Ca, Sr, Ba, Mg₁₋ₓCaₓ, Mg₁₋ₓSrₓ, Mg₁₋ₓBaₓ, Ca₁₋ₓSrₓ, Sr₁₋ₓBaₓ or Ca₁₋ₓBaₓ; and 0<x<1.

13. A core-shell structured precursor powder for sintering used for a dielectric material, wherein said core is composed of a first material and said shell is composed of a second material, and wherein a relative dielectric constant of said first material is larger than that of said second material.

14. The core-shell structured precursor powder of Claim 13, wherein a difference between the relative dielectric constant of said first material and the relative dielectric constant of said second material is equal to or more than 1,000 at 25°C.

15. The core-shell structured precursor powder of Claim 13, wherein a difference between the relative dielectric constant of said first material and the relative dielectric constant of said second material is equal to or more than 3,000 at 25°C.

16. The core-shell structured precursor powder of Claim 13, wherein a difference between the relative dielectric constant of said first material and the relative dielectric constant of said second material is equal to or more than 5,000 at 25°C.

17. The core-shell structured precursor powder of Claim 13, wherein said first material is selected from the group consisting of NiO doped with Li and Ti, NiO doped with Li and Al, CuO, and ACu₃Ti₄O₁₂ with Perovskite structure, and wherein A is Ca, Sr, Ca₁₋ₓSrₓ, Sr₁₋ₓBaₓ, Ca₁₋ₓBaₓ, Sc_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2}; and 0<x<1.

18. The core-shell structured precursor powder of Claim 13, wherein said second material is selected from the group consisting of A' TiO₃, Al₂O₃, HfO₂, TiO₂, MgO, SiO₂ and LaLu03, and wherein A' is Mg, Ca, Sr, Ba, Mg₁₋ₓCaₓ, Mg₁₋ₓSrₓ, Mg₁₋ₓBaₓ, Ca₁₋ₓSrₓ, Sr₁₋ₓBaₓ or Ca₁₋ₓBaₓ; and 0<x<1.

19. The core-shell structured precursor powder of Claim 13, further comprises a shell of a third material which covers said shell of the second material, wherein a relative dielectric constant of said first material is larger than that of said third material.

20. The core-shell structured precursor powder of Claim 19, wherein said third material is different from said second material, and wherein said third material is selected from the group consisting of A' TiO₃, Al₂O₃, HfO₂, TiO₂, MgO, SiO₂ and LaLu03, and wherein A' is Mg, Ca, Sr, Ba, Mg₁₋ₓCaₓ, Mg₁₋ₓSrₓ, Mg₁₋ₓBaₓ, Ca₁₋ₓSrₓ, Sr₁₋ₓBaₓ or Ca₁₋ₓBaₓ; and 0<x<1.

21. A process for preparing a core-shell structured precursor powder for sintering used for a dielectric material, comprising:
i) mixing a first material powder with a coating composition to coat said first material powder;
ii) drying the mixture obtained from the step i); and
iii) calcinating the dried mixture of the step ii) to form a core of said first material and a shell of a second material which covers said core.

22. The process of Claim 21, wherein said first material is selected from the group consisting of NiO doped with Li and Ti, NiO doped with Li and Al, CuO, and ACu₃Ti₄O₁₂ with Perovskite structure, and wherein A is Ca, Sr, Ca₁₋ₓSrₓ, Sr₁₋ₓBaₓ, Ca₁₋ₓBaₓ, SC_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2}; and 0<x<1.

23. The process of Claim 21, wherein said coating composition is a mixture of titanium isopropoxide and one or two selected from the group consisting of Mg(CH₃COO)₂, Ca(CH₃COO)₂, Sr(CH₃COO)₂, Ba(CH₃COO)₂, Mg(C₂H₇O₂)₂, Ca(C₂H₇O₂)₂, Sr(C₂H₇O₂)₂ and Ba(C₂H₇O₂)₂ when said shell is A' TiO₃, wherein A' is Mg, Ca, Sr, Ba, Mg₁₋ₓCaₓ, Mg₁₋ₓSrₓ, Mg₁₋ₓBaₓ, Ca₁₋ₓSrₓ, Sr₁₋ₓBaₓ or Ca₁₋ₓBaₓ; and 0<x<1.

24. The process of Claim 21, wherein said coating composition is a mixture of ethanol and one selected from the group consisting of Mg(C₂H₃O₂)₂, Ca(CH₃COO)₂, Sr(CH₃COO)₂, Ba(CH₃COO)₂, HfCl₄ and Al(CH₃COO)₂ when said shell is a single metal oxide excluding TiO₂.

25. The process of Claim 21, wherein said coating composition is a mixture of titanium isopropoxide and ethanol when said shell is TiO₂.

26. The process of Claim 21, wherein said drying of the step ii) is carried out by heating the mixture obtained from the step i) at 80°C to 100°C.

27. The process of Claim 21, wherein said drying of the step ii) is carried out by a spray drying.

28. The process of Claim 21, wherein the temperature of calcinating of said step iii) is between 1,000°C to 1,150°C.
